# EUROPEAN PATENT SPECIFICATION

(11) **EP 1 641 214 B1**
(45) Date of publication and mention of the grant of the patent: **10.04.2013**
(21) Application number: 05108117.2
(22) Date of filing: 05.09.2005
(51) Int. Cl.: H04L 29/06, G06F 17/30

(54) **End-to-end secure data transmission system through a third party infrastructure**
Sichere Ende-zu-Ende Datenübertragung über eine dritte Partei
Transmissions de données sécurisées de type bout-en-bout par un tiers

(30) Priority: 27.09.2004 EP 04300625
(43) Date of publication of application: 29.03.2006
(73) Proprietor: International Business Machines Corporation, Armonk, NY 10504 (US)
(72) Inventor: MARTINEZ MARTIN, Pablo, 28043, Madrid (ES); RODRIGUEZ RODRIGUEZ, Manuel, 28037, Madrid (ES)
(74) Representative: Gascoyne, Belinda Jane

(56) References cited:
- WO-A-02/21761
- US-A1- 2002 194 502
- US-A1- 2004 181 679

## Description

### Technical Field

The present invention relates to an end-to-end secure data transmission system through a third party infrastructure.

### Background

A portal (or content aggregator) is a software tool that collects information from a wide variety of content suppliers and presents the information in a standardised fashion on a single web-page or website.

In particular, a portal typically performs *inter alia* the following functions:
(a) enabling a user to specify:
   (1) desired information categories (e.g. news, sport scores, weather forecasts, market figures etc.);
   (2) desired content suppliers (e.g. Reuters, the Weather Channel etc.) for the selected information categories; and
   (3) the format in which the data gathered from the selected content suppliers is to be displayed;
(b) gathering the required data from the selected content suppliers;
(c) constructing a front-end user-interface which integrates and formats the gathered data in accordance with the user's specifications;
(d) optionally notifying the user of the collated data; and
(e) enabling the user to access the collated data through the front-end user-interface.

Consequently, portals provide a convenient and time-effective mechanism for viewing up-to-date information from a wide variety of content suppliers that enables the user to avoid having to otherwise visit a number of different websites to collate the desired information.

From a marketing perspective, it would be useful if a portal could collate and display value added information, such as personal banking information etc. Transmissions of secure information to and from portals are typically conducted through two independent SSL tunnels wherein the first tunnel exists between the user and the portal and the second tunnel exists between the portal and the content supplier. In use, a content supplier encrypts confidential information and transmits the resulting data to the portal through the second SSL channel. The portal must then decrypt and re-encrypt the data before it can be transmitted to the user through the first SSL tunnel.

From the above it can be seen that the security systems employed by traditional portals do not provide complete end-to-end security because a portal must be capable of accessing any confidential data passing therethrough in order to decrypt and re-encrypt the data for subsequent transmission to the user.

Thus, despite all of the afore-mentioned advantages of portals, users are often reluctant to allow such systems to collate and display sensitive information (e.g. personal banking details, utility billing information and personal emails) for fear that the information could be traced or accessed by a malicious or unauthorised user.

Another problem with the security systems employed in traditional portals is that they may require the user to provide a password to the portal and to the desired secure transactions involving sensitive data, thereby reducing or eliminating the processing overhead resulting from wastefully encrypting non-sensitive data. The sensitive data may be identified by a document. The document may be accessed by a requesting entity to determine which portions of a query should be encrypted prior to sending the query to a database server over a network. The document may also be accessed by a database server to determine which portions of query results should be encrypted prior to sending the query results to the requesting entity over the network.

US patent application US 2002/0194502 entitled "Secure selective sharing of account information on an internet information aggregation system" discloses a computerized method of providing and allowing secure selective sharing of account information between users of an Internet information aggregation system. A grantor user creates one or more view pages, each of the view pages having a plurality of monitors therein. A unique visitation access code is assigned to each of a plurality of grantee users of the system. The grantor uses the visitation access codes to selectively grant visitation access to the grantor's view pages to selected grantees. When a grantee logs onto the Internet information aggregation system via a processor, such as a computer or a mobile device, the system allows the grantee user to select one of the grantors' view pages, whereupon the system displays the selected grantor's view page on the grantee user's display.

### Summary of the invention

The present invention is directed to methods, systems and computer programs as defined in independent claims for performing end-to-end secure data transmission. Further embodiments of the invention are provided in the appended content supplier.

Existing end-to-end secure systems for secure content suppliers (e.g. on-line banking systems) typically require users to install specifically dedicated programs onto their machines before a user can obtain information from any of the secure content suppliers. In use, any of these programs employs the secure socket layer (SSL) protocol to connect a user's machine to a secure content supplier (e.g. bank) and obtain the required sensitive information (e.g. banking information).

However, existing end-to-end secure systems do not provide the remote data collating and formatting operations of a portal. In particular, since a portal cannot access confidential information from a secure content supplier, if a user wishes to view confidential information from a number of different secure content suppliers (for example a number of different banks or utility companies etc.) the user must separately visit the web-sites of each and every supplier.

Furthermore, since the information obtained from any given secure content supplier is typically formatted in accordance with the supplier's own specifications, a user effectively has little or no control over the format in which the information is presented to them. In addition, if a user visits a number of different secure content suppliers, not only does the user have to separately visit the websites of each supplier, the confidential information obtained therefrom may be presented in different formats depending on the suppliers in question.

US patent application US 2004/0181679 entitled "Secure database access through partial encryption" discloses systems, methods, and articles of manufacture for securing sensitive information involved in database transactions. Embodiments of the present invention selectively encrypt only portions of dependent Claims.

The present invention provides a single end-to-end secure data transmission system for a portal that extends through the entirety of a data transmission between a secure content supplier (e.g. banks, utility companies etc.) and a user thereof. With the recent dramatic growth in electronic communications there have been a number of regulations passed by the US Congress and in particular in California, placing specific restrictions on the storage and transmission of secure electronic data. Accordingly, the end-to-end secure data transmission system of the present invention may provide portals with a way of overcoming the legal difficulties encountered in attempting to access and collate sensitive data.

The present invention leverages existing Internet technologies such as extensible mark-up language (XML) (or any other suitable mark-up language) and SSL and creates a unique encryption in the XML layer that is independent of traditional SSL encryption. In particular, the present invention encrypts XML data as an object and passes the encrypted object from a secure content supplier to a user (via a portal) through whichever encrypted or clear channels are available over the network.

Accordingly, even if encrypted XML data is flowing through a network in an SSL tunnel, and decrypted by the portal (for subsequent re-encryption and transmission to the user), the encrypted XML fields are still protected in the XML package. This ensures that the encrypted XML data cannot be read by a man-in-the-middle hacker that receives the SSL encrypted packets and decrypts them, since the data in the decrypted SSL packet remains encrypted in the XML object.

The end-to-end secure data transmission system of the present invention enables a portal to process data from a secure content supplier regarding the formatting of sensitive information without processing the sensitive information itself.

Accordingly, the end-to-end secure data transmission system of the present invention enables a portal to collate a wide variety of different types of information i.e. sensitive and non-sensitive information in accordance with the requirements of the user and to integrate these different information types into a single standardised user-interface.

Finally, the end-to-end secure data transmission system of the present invention enables a user to dispense with having to remember and provide passwords and usernames to a portal and a secure content supplier.

### Brief description of the drawings

The above and other objects, features and advantages of the invention will be better understood by reading the following more particular description of the invention in conjunction with the accompanying drawings wherein:
Figure 1 is a flow diagram of the operations performed by a user, a portal and a secure content supplier in implementing an end-to-end secure data transmission method according to the invention; and
Figure 2 shows an attempted man-in-the-middle hacking attack on the end-to-end-secure data transmission system according to the invention.

### Preferred Embodiment of the Invention

Until recently it was assumed that a portal had to receive data from a content supplier in clear text form in order to collate it with data received from other content suppliers and format the data in accordance with the specifications of a user.

It was further assumed that in the event that data was received from a secure content supplier in encrypted form (or otherwise unavailable in clear text form), the portal had to be capable of decrypting the data, to format the data in accordance with the user specifications.

However, it has been recently determined that portals do not need to receive data from content suppliers in clear-text form. Instead, the only information that a portal needs to receive in clear text form are instructions as to how particular content from a content supplier should be represented in the web-page generated by the portal. In other words, portals only need to receive and process information detailing how the data passing therethrough is to be represented and do not need to receive and process the data itself.

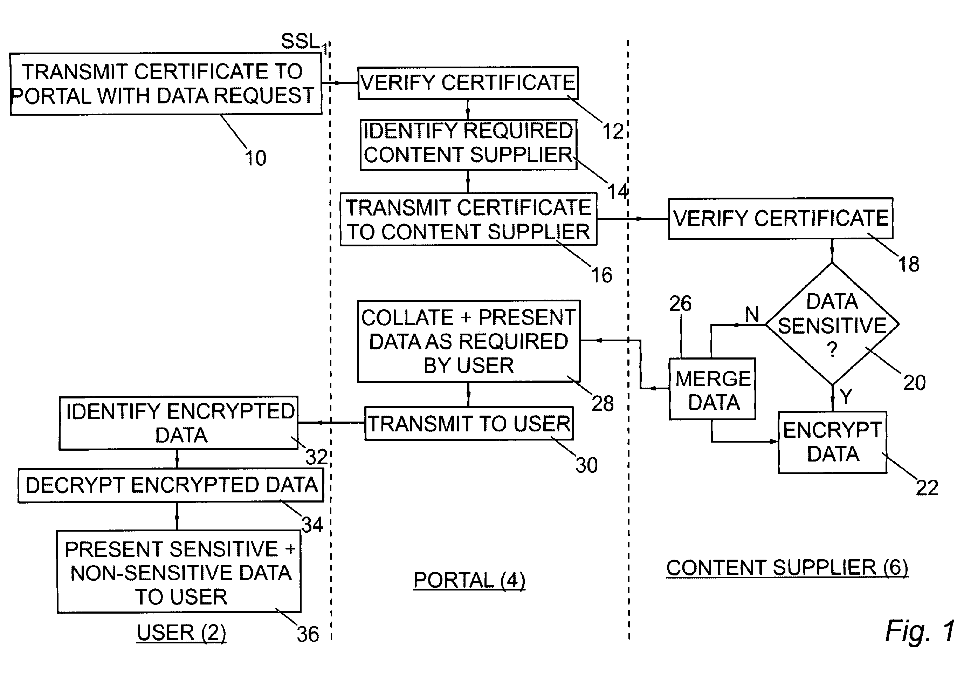

In a first embodiment of an end-to-end secure data transmission system, the communications between a user, portal and secure content supplier are conducted without full SSL handshaking. In a second embodiment of an end-to-end secure data transmission system, the communications between a user, portal and secure content supplier employ full SSL handshaking. The following discussion will provide a broad overview of the operation of the first and second embodiments of the end-to-end secure data transmission system by referring to Figure 1. This broad overview will be followed by a more detailed description of the process by which encrypted information from a secure content supplier is recognised by a portal.

### (a) Overview of the Operation of the First Embodiment of the End-to-End Secure Data Transmission System

Before a portal can collate information on behalf of a user, the user must establish an account with the portal and select a desired secure content supplier and information type from a portal database. The user must also define the format in which they wish the desired information to be presented to them.

Referring to Figure 1, in step 10, once the user 2 has established an account with the portal 4, the user 2 can login to the portal 4 (by providing an appropriate password) and issue an information request to the portal 4. The information request includes details of the user's public certificate (containing the user's public key) and is conducted under the SSL protocol (SSL₁) .

In step 12, on receipt of an information request from the user 2, the portal 4 may or may not verify the user's public certificate. In step 14 the portal 4 determines the user's preferred content suppliers 6 from the user's account details. For the sake of simplicity, in the present example it will be assumed that the user 2 has designated only one preferred content supplier 6. However, it will be appreciated that the user 2 may designate as many preferred content suppliers 6 as permitted by the portal's software. In the event that the user 2 selects multiple preferred content suppliers 6, the procedure described below will apply to each of the designated preferred content suppliers 6.

Returning to the present example, in step 16 the portal 4 establishes a connection under the SSL protocol (SSL₂) to the user's preferred content supplier 6 and transmits the user's public certificate to the content supplier 6 together with a request for the information required by the user 2.
In step 18 on receipt of the information request and the user's public certificate from the portal 4, the content supplier 6 verifies the user's public certificate. In step 20 once the user's public certificate has been verified, the content supplier 6 determines whether or not the required information is confidential in nature.

In the event that the required information is sensitive, in step 22 the content supplier 6 encrypts the information and packages the resulting data with meta-data specifying the format and data type of the encrypted information. In the event that the required information is not sensitive, the content supplier 6 does not encrypt the data. In step 26 the content supplier 6 merges the encrypted confidential data and the unencrypted non-confidential data and transmits the resulting data to the portal 4 through the SSL channel (SSL₂).

In step 28, on receipt of the data from the content supplier 6, the portal 4 produces a presentation of the data by collating and formatting all the data in accordance with the user's specifications. The portal 4 inserts the encrypted confidential data as received from the content supplier 6 into the above presentation together with standardised HTML/XML (or other mark-up language) tags to designate the security status of the data.

In step 30 the presentation is transmitted to the user 2. In step 32 on receipt of the presentation from the portal 4, a plug-in tool in the user's browser detects the HTML/XML tags in the presentation that identify the presence of encrypted sensitive data therein. In step 34 the browser's plug in tool then decrypts the sensitive data with the user's private key (stored on the user's machine). In step 36 the plug-in tool in the user's browser includes the decrypted information in the above presentation of the rest of the collated information.

### (b) Overview of the Operation of the Second Embodiment of the End-to-End Secure Data Transmission System

The SSL protocol provides an option wherein both a client can verify itself to a server and the server can verify itself to the client. This is known as a complete handshake. The second embodiment of the end-to-end secure data transmission system employs the complete handshaking SSL option to enable a portal 4 to verify the identity of a user 2 (through the user's public certificate) and the user 2 to verify the identity of the portal 4 (through the portal's public certificate). This establishes a completely secure communication channel between the user 2 and the portal 4 that does not require the use of any login passwords or usernames by the user 2. Once the user 2 has established the secure communication channel with the portal 4, the rest of operations of the end-to-end secure data transmission system proceed as described for the first embodiment.

### (c) Detailed Discussion of the Mechanism by which the Content/Portal Aggregator Recognises Encrypted Information

Returning to steps 24 and 26 in Figure 1, the information transmitted by the content supplier 6 to the portal 4 may contain confidential and non-confidential material. Accordingly, before a content supplier 6 transmits any information to the portal 4, the content supplier 6 must provide a mechanism to enable the portal 4 to identify any confidential elements in the information.

A simple analogy of a communication between three people will be used below to further elaborate upon the mechanism by which confidential and non-confidential information is transmitted to the user 2 by the content supplier 6 through the portal 4.

For the sake of the analogy, assume that there are three people Alice, Bob and Caroline, wherein Alice lives in a first country (e.g. Spain), Caroline lives in a second country (e.g. Ireland) and Bob frequently travels between the Ireland and Spain to deliver mail between the two countries.

Further assume that Alice asks Bob to bring her a letter from Caroline. In this case, Bob goes to Caroline and asks for a letter to Alice. Caroline writes the letter and it puts it inside an envelope. However, since Bob is delivering several letters to Spain, Caroline must provide detailed delivery instructions to Bob (e.g. Caroline must provide Alice's address details). Thus, whilst Bob can deliver the letter to Alice, he cannot read the letter because it is inside the envelope.

Returning to the present end-to-end secure data transmission system, any confidential elements of the information transmitted by the content supplier 6 to the user 2 are transmitted to the portal 4 in encrypted form (i.e. can only be accessed by the user 2). Similarly, any non-confidential elements of the information are transmitted to the portal 4 in clear text form (i.e. can be accessed by the portal 4).

Nonetheless, the portal 4 must be provided with a mechanism of distinguishing between the encrypted and clear text data because the portal 4 must format the data in accordance with the user's specifications before the data can be sent to the user 2. In particular, before the content supplier 6 transmits data to the portal 4, the content supplier 6 tags the different elements of the data, identifying them as being confidential or non-confidential.

This mechanism is explained in more detail by the following example. The tags employed in the following example are fictitious and serve only to explain the principles of the tagging operation. Accordingly, it will be realized that the present invention should not be limited in any way to the tags mentioned in the following example.

For the purpose of this example, assume that a bank is informing a user of their current balance as follows:

```
 <balance>
 your balance is
 <money> 11,343.00 $ </money>
 </balance>
```

However, since the above information is sensitive in nature, the information should not be freely accessible to anyone apart from the user in question. Accordingly, the bank should encrypt the above message and actually transmit a message such as that shown below:

```
 <balance>
 your balance is
 <encrypted>
      wetoihdkeew2refsfoa9wewet
 </encrypted>
 </balance>
```

In this case, the end user should be the only entity capable of decrypting "wetoihdkeew2refsfoa9wewet"

However, since the portal 4 must format any collated data in accordance with the specifications of the user, the portal 4 requires meta information detailing the format of the data in its unencrypted form. Consequently, the bank should transmit to the portal 4 a message such as that shown below:

```
 <balance>
 your balance is
 <encrypted>
      wetoihdkeew2refsfoa9wewet
      <dataformat>5.2f</dataformat>
 </encrypted>
 </balance>
```

In this case the message transmitted by the secure information source to the portal 4 comprises:
(a) Non-confidential data (i.e. "Your balance is") in clear text form;
(b) Confidential data in encrypted form (i.e. wetoihdkeew2refsfoa9wewet); and
(c) Meta Information for the portal 4 (specifying for instance, the format of the unencrypted confidential data (i.e. 5.2f, which indicates that the confidential data comprises a floating point number with five digits and two digits before and after the decimal point respectively)).

When the portal 4 receives this information, it transforms most of the tags into HTML. However, since the portal 4 does not have access to the confidential information in the message, the portal 4 does not convert the encrypted data into HTML.

When the end-user's browser accesses the above HTML code, it detects the <encrypted> tag in the HTML code and decrypts the relevant encrypted data with the user's private key stored on the machine.

Accordingly, this operation transforms <encrypted wetoihdkeew2refsfoa9wewet</encrypted> into <money> 11,343.00 $ </money> which can be shown on the user's screen.

### (a) Man-in-the Middle Hacking Attack

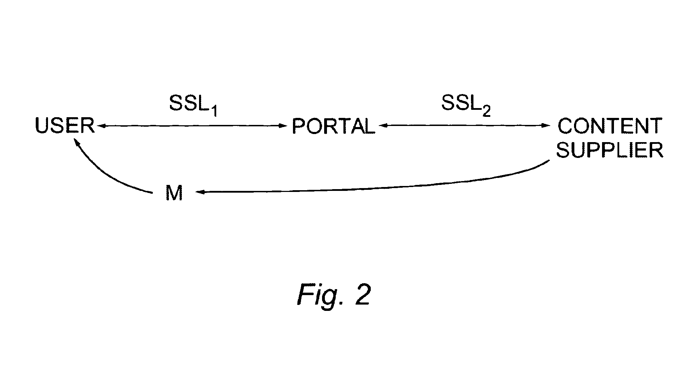

Referring to Figure 2, in the present end-to-end secure data transmission system, a portal 4 transmits a user's information request to a content supplier 6 together with the user's public certificate, which comprises the user's SSL public key signed by an authorized third party (e.g. Verisign).

If an unauthorized person M attempted to intercept the communication from the content supplier and substitute his public key for the user's, M's public key would not be signed by the authorized third party. Accordingly, on receipt of the information the user's browser issues an alarm indicating that the communication had been intercepted.

On a final note, whilst the present invention has been described in terms of SSL transmission channels between the user's machine, portal and content supplier, it will be appreciated that the invention could be implemented with other secure transmission channels and as such should not be limited to the SSL channels specifically mentioned in the description. It will further be appreciated that whilst the above invention is described in terms on an XML implementation, other suitable mark-up languages could also be used. Consequently, the present invention is not limited to an XML implementation.

Modifications and alterations may be made to the above without departing from the scope of the invention.

## Claims

1. A method for use in a portal (4), of end-to-end secure data transmission between a content supplier (6) and a end user (2) comprising the steps of:
(a) receiving through a first secure transmission channel(SSL1) a data request and a public certificate comprising a public key from the end user (2);
(b) transmitting (16) through a second secure transmission channel (SSL2) the data request and the public certificate to the content supplier (6);
(c) receiving through the second secure transmission chanel (SSL2) a data transmission from the content supplier (6), wherein the data transmission comprises confidential data and non-confidential data and wherein the confidential data being encrypted by means of said public key together with an identifying means and non-confidential data being received in unencrypted form; (d) formatting (28) the non-confidential data in accordance with a specification provided by the user (2); and(e) transmitting (30) through the first secure transmission channel (SSL1) the encrypted confidential data, the identifying means and the formatted non-confidential data to the end user (2), said identifying means indicating the data type and the format of the unencrypted confidential data.

2. A method, for use in a portal, of end-to-end secure data transmission according to Claim 1 wherein the method comprises a further step of verifying the identity of the user before the step (b) of transmitting through a second secure transmission channel (SSL2) the data request and the public certificate to the content supplier.

3. A method for use in a portal, of end-to-end secure data transmission according to any of the preceding Claims wherein the step (a) of receiving through the first secure transmission channel(SSL1) the data request and the public certificate from the end user is preceded by a step of performing a complete handshake with a computer being employed by the end user.

4. A system comprising means adapted for carrying out each step of the method according to claims 1 to 3.

5. A computer program comprising instructions adapted for carrying out each of the steps of the method according to claims 1 to 3 when executed by a computer system.

## Patentansprüche

1. Verfahren zur Verwendung in einem Portal (4) von sicherer Ende-zu-Ende-Datenübertragung zwischen einem Anbieter von Inhalten (6) und einem Endnutzer (2), wobei das Verfahren die Schritte umfasst:
(a) Empfangen einer Datenanforderung über einen ersten sicheren Datenübertragungs-Kanal (SSL1) und eines öffentlichen Zertifikats, das einen öffentlichen Schlüssel von dem Endnutzer (2) umfasst;
(b) Übertragen (16) der Datenanforderung und des öffentlichen Zertifikats über einen sicheren Datenübertragungs-Kanal (SSL2) an den Anbieter von Inhalten (6);
(c) Empfangen einer Datenübertragung über den zweiten sicheren Datenübertragungs-Kanal (SSL2) von dem Anbieter von Inhalten(6), wobei die Datenübertragung vertrauliche und nichtvertrauliche Daten umfasst und wobei die vertraulichen Daten durch den öffentlichen Schlüssel zusammen mit einem Identifikationsmittel verschlüsselt sind und die nichtvertraulichen Daten in unverschlüsselter Form empfangen werden; (d) Formatieren (28) der nichtvertraulichen Daten gemäß einer durch den Nutzer (2) bereitgestellten Vorgabe; und (e) Übertragen (30) der verschlüsselten, vertraulichen Daten, der Identifikationsmittel und der formatierten, nichtvertraulichen Daten über den ersten sicheren Datenübertragungs-Kanal (SSL1), wobei das Identifikationsmittel den Datentyp und das Format der verschlüsselten, vertraulichen Daten angibt.

2. Verfahren zur Verwendung in einem Portal zur sicheren Ende-zu-Ende-Datenübertragung nach Anspruch 1, wobei das Verfahren einen weiteren Schritt des Prüfens der Identität des Nutzers vor dem Schritt (b) des Übertragens der Datenanforderung und des öffentlichen Zertifikats an den Anbieter von Inhalten über einen sicheren zweiten Datenübertragungs-Kanal (SSL2) umfasst.

3. Verfahren zur Verwendung in einem Portal zur sicheren Ende-zu-Ende-Datenübertragung nach einem der vorangehenden Ansprüche, wobei dem Schritt (a) des Empfangens der Datenanforderung und des öffentlichen Zertifikats von dem Endnutzer durch den sicheren ersten Datenübertragungs-Kanal (SSL1) ein Schritt des Ausführens eines vollständigen Handshake mit einem Computer vorausgeht, der von dem Endnutzer verwendet wird.

4. System, das Mittel umfasst, die zum Durchführen jedes Schrittes des Verfahrens nach den Ansprüchen 1 bis 3 geeignet sind.

5. Computerprogramm, das Befehle umfasst, die zum Durchführen aller Schritte des Verfahrens nach den Ansprüchen 1 bis 3 geeignet sind, wenn das Computerprogramm von einem Computersystem ausgeführt wird.

## Revendications

1. Procédé destiné à être utilisé dans un portail (4), de transmission de données sécurisée de bout en bout entre un fournisseur de contenu (6) et un utilisateur final (2), le procédé comprenant les étapes consistant à :
(a) recevoir par l'intermédiaire d'un premier canal de transmission sécurisé (SSL1) une demande de données et un certificat public comprenant une clé publique de l'utilisateur final (2) ;
(b) transmettre (16) par l'intermédiaire d'un second canal de transmission sécurisé (SSL2) la demande de données et le certificat public au fournisseur de contenu (6) ;
(c) recevoir par l'intermédiaire du second canal de transmission sécurisé (SSL2) une transmission de données du fournisseur de contenu (6), dans lequel la transmission de données comprend des données confidentielles et des données non confidentielles, et dans lequel les données confidentielles sont chiffrées au moyen de ladite clé publique ainsi qu'avec un moyen d'identification et les données non confidentielles sont reçues sous une forme non chiffrée ; (d) formater (28) les données non confidentielles conformément à une spécification fournie par l'utilisateur (2) ; et (e) transmettre (30) par l'intermédiaire du premier canal de transmission sécurisé (SSL1) les données confidentielles chiffrées, le moyen d'identification et les données non confidentielles formatées à l'utilisateur final (2), ledit moyen d'identification indiquant le type de données et le format des données confidentielles chiffrées.

2. Procédé, destiné à être utilisé dans un portail, de transmission de données sécurisée de bout en bout selon la revendication 1, dans lequel le procédé comprend une étape supplémentaire de vérification de l'identité de l'utilisateur avant l'étape (b) de transmission par l'intermédiaire d'un second canal de transmission sécurisé (SSL2) de la demande de données et du certificat public au fournisseur de contenu.

3. Procédé destiné à être utilisé dans un portail, de transmission de données sécurisée de bout en bout selon l'une quelconque des revendications précédentes, dans lequel l'étape (a) de réception par l'intermédiaire du premier canal de transmission sécurisé (SSL1) de la demande de données et du certificat public de l'utilisateur final est précédée par une étape d'exécution d'un établissement de liaison complet avec un ordinateur qui est utilisé par l'utilisateur final.

4. Système comprenant des moyens adaptés pour mettre en oeuvre chacune des étapes du procédé selon les revendications 1 à 3.

5. Programme d'ordinateur comprenant des instructions conçues pour mettre en oeuvre chacune des étapes du procédé selon les revendications 1 à 3, lorsqu'il est exécuté par un système informatique.
